Europäisches Patentamt

European Patent Office

Office européen des brevets

(11) Numéro de publication: **0 040 160**
**B1**

(12) **FASCICULE DE BREVET EUROPEEN**

(45) Date de publication du fascicule du brevet:
**25.05.83**

(21) Numéro de dépôt: **81400764.7**

(22) Date de dépôt: **13.05.81**

(51) Int. Cl.³: **G 21 D 3/08,** G 21 C 1/08

(54) Procédé de régulation de la pression du circuit primaire pendant les phases de mise à l'arrêt d'un réacteur nucléaire à eau sous pression.

(30) Priorité: **14.05.80 FR 8010874**

(43) Date de publication de la demande:
**18.11.81 Bulletin 81/46**

(45) Mention de la délivrance du brevet:
**25.05.83 Bulletin 83/21**

(84) Etats contractants désignés:
**BE CH DE GB IT LI SE**

(56) Documents cités:
**US-A-3 060 110**
**US-A-3 1ı4 414**
**ATOMKERNENERGIE, vol. 14, 1969, no. 2, pages 81—93 G. FREI et al.:»Dynamic tests on the MZFR«**
**TECHNISCHE RUNDSCHAU, vol. 65, 1973, no. 52, pages 41—45 K. RIEMANN et al.: »Leittechnik für Kernkraftwerke«**

(73) Titulaire: **Framatome, Tour Fiat 1 place de la Coupole, F-92400 Courbevoie (FR)**

(72) Inventeur: **Ruiz, Pierre, 15, avenue Clémenceau, F-93150 Le Blanc-Mesnil (FR)**

(74) Mandataire: **Dupuy, Louis et al, CREUSOT-LOIRE 15 rue Pasquier, F-75383 Paris Cedex 8 (FR)**

BUNDESDRUCKEREI BERLIN

## Procédé de régulation de la pression du circuit primaire pendant les phases de mise à l'arrêt d'un réacteur nucléaire à eau sous pression

La présente invention concerne un procédé de régulation de la pression du circuit primaire pendant les phases de mise à l'arrêt d'un réacteur nucléaire à eau sous pression, et plus particulièrement la régulation pendant la phase dite de »noyage« du pressuriseur.

Le circuit primaire de refroidissement d'un réacteur nucléaire à eau sous pression comporte une ou plusieurs boucles où l'eau circule sous l'action d'une pompe primaire entre le coeur du réacteur où elle absorbe la chaleur produite par les réactions nucléaires, et un générateur où elle cède cette chaleur au fluide secondaire qui y est vaporisé pour alimenter les machines turbo-électriques.

Lorsque le réacteur fonctionne en puissance l'eau primaire est à une température de l'ordre de 320°C dans le coeur, et pour la maintenir à l'état liquide la pression dans les circuits primaires est maintenue à environ 155 bars. Cette pression est régulée par l'action d'un pressuriseur qui fonctionne par chauffage ou aspersion d'eau froide. Si par exemple la pression tend à diminuer, une partie de l'eau du pressuriseur est vaporisée par un système de cannes chauffantes de façon à augmenter le volume et la pression du matelas de vapeur qui occupe le dôme supérieur du pressuriseur, pression qui est communiquée à tout l'ensemble du circuit primaire par une tubulure d'expansion débouchant dans le fond inférieur du pressuriseur. On obtient au contraire une diminution de la pression primaire par aspersion d'eau froide sur la phase vapeur à la partie supérieure du pressuriseur, ce qui a pour effet de condenser une partie de cette vapeur.

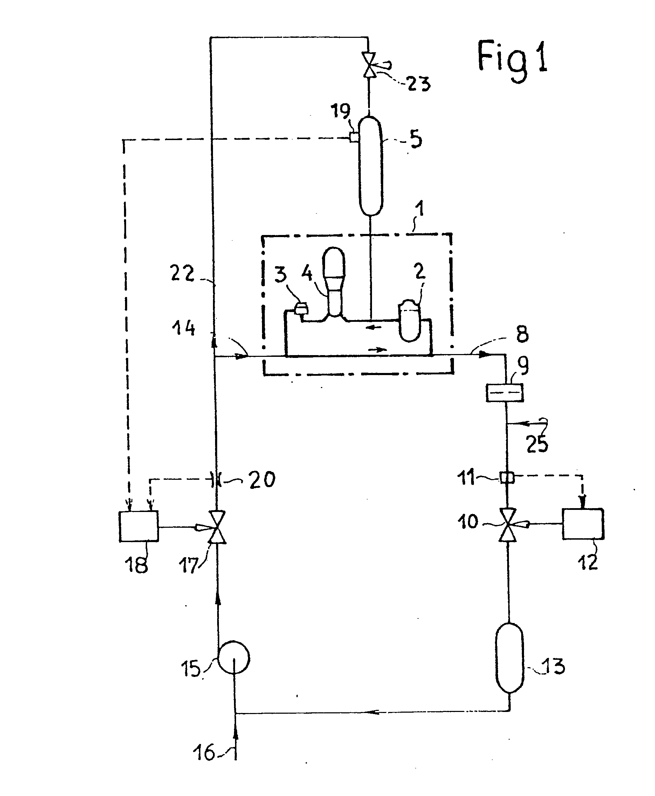

La figure 1 représente de façon schématique extrêmement simplifiée un circuit primaire désigné symboliquement par l'ensemble 1 entouré d'un trait mixte fort, et qui regroupe le coeur 2, une pompe primaire 3 et un générateur de vapeur 4. La tubulure d'expansion du pressuriseur 5 est piquée sur la tuyauterie d'eau chaude, entre le coeur du réacteur et le générateur de vapeur.

De façon tout-à-fait usuelle un circuit dit de »contrôle volumétrique et chimique« (circuit RCV) est disposé en dérivation sur le circuit primaire. Le circuit RCV comporte une ligne de décharge 8 à deux étages de détente successifs. Le premier étage »haute pression« est constitué par un système d'orifices de détente 9; la vanne de réglage 10 constitue l'étage »basse pression«. Chaque étage de détente est normalement précédé d'un refroidissement non représenté sur le schéma. Le débit de décharge dans la ligne 8 est fonction du nombre d'orifices 9 mis en service.

La pression dans la ligne de décharge est contrôlée par la vanne 10, asservie à un signal de pression pris en 11 immédiatement en amont de la vanne, et agissant sur le régulateur 12. Le circuit RCV comporte ensuite un réservoir de contrôle volumétrique 13, normalement muni d'une régulation de niveau non représentée sur le schéma. Le circuit RCV se referme par une ligne de charge 14 comportant une pompe 15 qui réinjecte dans le circuit primaire, à travers une vanne de réglage de charge 17, le fluide déchargé ou de l'eau complémentaire d'appoint introduite en 16. Le débit de charge est asservi par un régulateur 18 au niveau d'eau mesuré en 19 dans le pressuriseur 5, et au signal de débit mesuré en 20 en aval de la vanne 17.

Le circuit 22 d'aspersion d'eau froide sur la phase vapeur du pressuriseur est pris en dérivation sur la ligne de charge 14 et aboutit à la vanne de commande d'aspersion 23.

Lorsque l'on veut mettre le réacteur à l'arrêt, après bien entendu arrêt des réactions nucléaires par descente des barres, il est nécessaire de ramener progressivement le circuit primaire à une température et une pression plus basses.

Dans une première phase, qui permet d'arriver à 30 bars et 180° environ, on procède par décharge de vapeur au condenseur principal ou à l'atmosphère, en maintenant au moins une pompe primaire en fonctionnement pour un refroidissement uniforme de toutes les boucles. En même temps, on procède à une aspersion dans le pressuriseur pour diminuer la pression, tout en maintenant une valeur minimum nécessaire pour permettre le fonctionnement des pompes. Pendant cette première phase l'eau primaire contenue dans le pressuriseur est dans un état diphasique liquide-vapeur à l'équilibre de saturation.

Dans une deuxième phase ultérieure, et tout maintenant une pompe primaire en service, on met en jeu le circuit de réfrigération du réacteur à l'arrêt (circuit RRA) constitué d'un circuit fermé avec prélèvement et refoulement dans les boucles primaires, une partie de ce refoulement s'effectuant en 25 (figure 1) dans le circuit RCV. Lors de cette seconde phase, où l'on veut atteindre une température de 70°, il faut cependant conserver une pression d'au moins 23 bars qui est la pression minimum de fonctionnement des pompes primaires. Ces conditions ne peuvent être atteintes qu'en milieu monophasique si l'on veut éviter des contraintes thermiques trop importantes sur la tubulure d'expansion du pressuriseur. Il faut donc pour cette deuxième phase résorber la »bulle« de vapeur située au sommet du pressuriseur.

Alors qu'en régime diphasique initial c'est le pressuriseur qui règle la pression primaire, en régime monophasique ultérieur la pression primaire sera réglée par la vanne de détente 10 de la ligne de décharge, la vanne de charge 17 ayant alors une consigne de débit constant puisque le niveau de liquide au pressuriseur est constant et maximum. Le débit de la ligne de décharge 8 n'est plus fourni par les orifices de détente haute pression 9 qui sont prévus pour une forte chute de pression ; le débit est alors obtenu par le refoulement en 25 du circuit RRA.

Mais la résorption de la bulle de vapeur, entre l'état diphasique et l'état monophasique, passe par une phase intermédiaire lorsque la bulle n'occupe que la dernière partie supérieure du pressuriseur, et pendant cette phase on ne peut pas suivre l'évolution du niveau de liquide car il est difficile de mettre des organes de mesure dans la partie supérieure du dôme du pressuriseur à proximité des rampes d'aspersion. Dans cette phase intermédiaire la régulation normale par la vanne 10 de décharge basse pression présente l'inconvénient de ne pas prendre directement la pression du primaire comme pression de référence, mais de prendre celle d'un circuit qui n'est représentatif de cette pression primaire ni en statique ni en dynamique. Elle n'est donc pas suffisante pour contrôler d'une manière fiable la pression du circuit primaire lors de la phase finale de résorption de la bulle de vapeur au point haut du pressuriseur.

Pour des variations rapides de pression la bulle constitue un système adiabatique qui n'absorbe pas la chaleur. Elle ne peut donc que difficilement se résorber sous l'action de la pression car cette résorption doit passer par un rééquilibrage de la température, ce qui est une action longue et mal définie. En outre l'observation indirecte de l'évolution de la bulle par l'examen des débits de charge et de décharge est faussée par les variations de volume du circuit primaire sous l'effet des variations de température. Cette imprécision sur l'évolution de la bulle peut conduire à des surpressions imprévues du fluide primaire pouvant par exemple entrainer l'ouverture de soupapes du circuit de refroidissement à l'arrêt.

L'invention permet de résorber la dernière partie de la bulle de vapeur de manière efficace et sûre, en travaillant à pression sensiblement constante, et en surveillant l'évolution de la bulle.

Selon l'invention lorsque le niveau du liquide atteint la partie supérieure du pressuriseur où la détection du niveau devient inopérante, on garde un débit constant sur la conduite de charge, on règle le débit de décharge par une régulation à action rapide à partier d'une mesure directe de la pression du circuit primaire, puis on procède à des aspersions successives au pressuriseur et on détecte la réduction du débit de décharge qui est immédiatement provoquée par la diminution de pression due à la condensation dans le pressuriseur, et ceci jusqu'à qu'une nouvelle aspersion n'ait plus d'effet sur le débit de décharge, le refroidissement pouvant alors se poursuivre avec régulation de pression du primaire par la vanne de décharge.

Selon une forme préférentielle de réalisation de l'invention, le procédé est rendu automatique par asservissement du débit de la vanne de commande d'aspersion à partir de la mesure du débit de décharge, en utilisant une régulation à vitesse de réaction plus lente que celle de la régulation de la vanne de décharge à partir de la pression primaire.

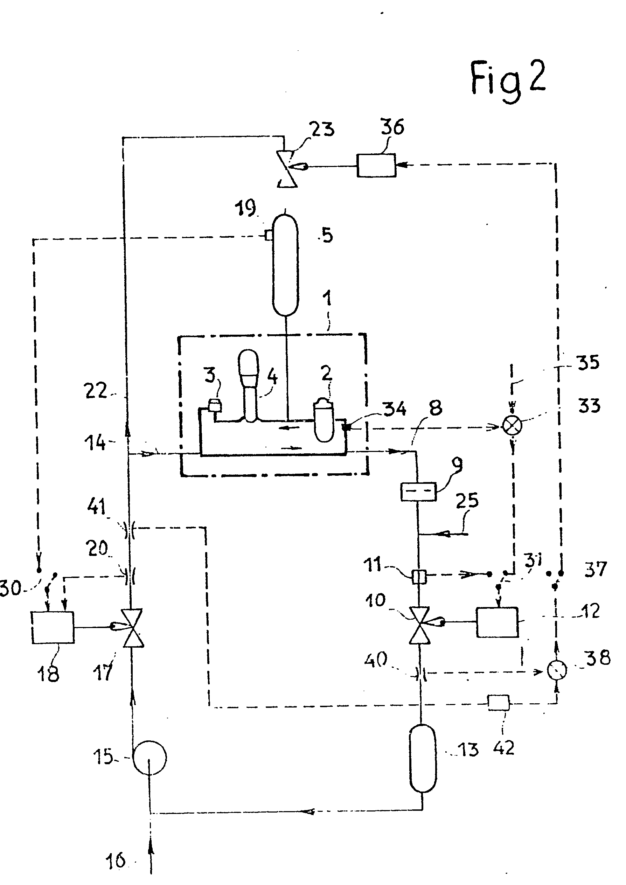

L'invention sera mieux comprise en se référant à un mode de réalisation donné à titre d'exemple et représenté par la figure 2 annexée. La figure 2 est un schéma homologue à celui de la figure 1, mais sur lequel figurent les éléments complémentaires pour la mise en oeuvre de l'invention.

Ici le signal de mesure du niveau d'eau dans le pressuriseur, prélevé en 19, est appliqué au régulateur 18 de la vanne de charge 17 par l'intermédiaire d'un commutateur 30. De même la boucle de régulâtion 12 de la vanne de décharge 10, à partir du capteur de pression 11, passe par un commutateur 31 qui reçoit sur un autre plot le signal de sortie d'un comparateur 33. Le comparateur 33 reçoit le signal d'un capteur de pression 34, directement monté sur le circuit primaire du réacteur; un signal représentant une pression de consigne est appliqué par 35 sur le comparateur 33.

Par ailleurs la vanne 23 de réglage du débit d'aspersion est commandée par un régulateur 36 qui, par l'intermédiaire d'un commutateur 37, reçoit le signal de sortie d'un comparateur 38. Le comparateur 38 reçoit le signal d'un capteur de débit 40 disposé en aval de la vanne 10 sur la ligne de décharge, et le signal d'un capteur de débit 41 disposé en aval de la vanne 17 sur la ligne de charge; un majorateur-minorateur 42 est intercalé entre le capteur 41 et le comparateur 38.

Lorsque les trois commutateurs 30, 31 et 37 sont basculés à gauche, à l'inverse de ce qui est représenté figure 2, tous les circuits de régulation sont dans le même état que sur la figure 1. C'est dans ces conditions que l'on réalise la première phase du refroidissement du circuit primaire, avec aspersion continue du circuit primaire, réglage du débit de décharge en fonction de la pression prise en aval des orifices de détente haute pression 9, et réglage du débit de charge en fonction du niveau de l'eau dans le pressuriseur.

Lorsque le niveau d'eau atteint la partie supérieure du pressuriseur, et qu'il n'est plus possible de suivre exactement son évolution, on bascule les commutateurs dans la position de la figure 2, qui permet la résorption automatique de la bulle par mise en action de deux chaines de régulation couplées et ayant des vitesses de réaction différentes.

Le débit de charge est maintenu constant par la vanne 17 dont le régulateur 18 est isolé de la mesure 19.

La comparaison, en 33, de la pression primaire réelle mesurée en 34, avec une pression de consigne affichée par 35, commande par le régulateur 12 à grande vitesse de réaction l'ouverture de la vanne de décharge 10 et crée un débit de décharge. Ce débit de décharge est mesuré en 40, et comparé en 38 à un débit de consigne élaboré, par minoration en 42, à partir

3

du débit de charge mesuré en 41. Le signal résultant de cette comparaison est appliqué au régulateur à plus faible vitesse de réaction 36 qui commande l'ouverture de la vanne 23 et entraine une aspersion du pressuriseur. Cette aspersion entraine une condensation de vapeur et une diminution de pression primaire; la baisse de pression primaire est immédiatement répercutée par la chaine 34-33-12 en une diminution d'ouverture de la vanne de décharge 10, et l'aspersion est maintenue jusqu'à diminution du débit de décharge à sa valeur de consigne. Cette opération est répétée jusqu'à ce que l'action sur le minorateur 42 n'ait plus d'effet sur le débit de décharge. On est alors certain que la bulle a été résorbée. A ce moment là en effet, il n'y a plus de condensation de vapeur exigeant un remplacement par un volume équivalent d'eau, mais tout se passe comme si tout le débit de charge était directement introduit dans la tuyauterie du circuit primaire, sans dérivation vers l'aspersion du pressuriseur; le seul effet de l'aspersion est alors de refroidir le pressuriseur et d'homogénéiser la température de ce dernier avec celle du circuit.

Après disparition de la bulle, le refroidissement peut se poursuivre avec régulation de la pression par la vanne de décharge.

On peut aussi prévoir une automatisation encore plus complète du procédé, en faisant élaborer par un micro-processeur les fonctions de commutation des modes de régulation avant noyage complet de la bulle de vapeur et les fonctions de commande d'aspersion pour la fin de résorption de la bulle par paliers successifs ou de manière continue.

On notera encore que ces chaines de régulation peuvent aussi, à l'inverse, être utilisées pour passer d'un état monophasique à un état diphasique, si on utilise un régulateur homologue au régulateur 36 pour la commande des cannes chauffantes de vaporisation dans le pressuriseur. On élabore alors, pour le comparateur 38, un signal de consigne majoré en 42 par rapport au signal de mesure du débit de charge en 41, et tout se passe alors à l'inverse de ce qui a été décrit plus haut lorsque le signal de 41 était minoré en 42.

Bien entendu l'invention n'est pas strictement limitée à la réalisation qui a été décrite à titre d'exemple, mais elle couvre aussi les réalisations qui n'en différeraient que par des détails, par des variantes de réalisation ou par l'utilisation de moyens équivalents. C'est ainsi qu'on pourrait aussi mettre en oeuvre le procédé de réglage de façon manuelle en procédant à des aspersions successives par action directe sur la vanne 23, et en détectant par une simple mesure de débit en 40 si l'aspersion a entrainé une condensation de vapeur, donc une baisse de pression primaire et une variation immédiate de débit de décharge.

## Revendications

1. Procédé de régulation de la pression du circuit primaire (1) d'un réacteur nucléaire à eau sous pression pendant les phases de mise à l'arrêt, pour être utilisé dans une installation comportant, en dérivation sur le circuit primaire, un circuit de contrôle volumétrique avec une vanne de décharge (10) du circuit primaire, un réservoir (13) de contrôle volumétrique, puis une pompe (15) de réinjection vers le circuit primaire à travers une vanne de charge (17), le circuit primaire étant relié à un pressuriseur vapeur-liquide (5) muni d'un circuit d'aspersion de la phase vapeur commandé par une vanne (23) alimentée à partier de la conduite de charge (14) du circuit de contrôle volumétrique, procédé selon lequel, pendant que l'on refroidit le circuit par décharge de vapeur secondaire, on effectue une aspersion continue d'eau froide sur la vapeur contenue dans le pressuriseur (5), on règle le débit de décharge en fonction d'une mesure de pression (11) prise immédiatement en amont de la vanne de décharge (10) et après un étage amont de détente (9), et on règle le débit de charge en fonction du niveau de liquide dans le pressuriseur (5), caractérisé par le fait que l'orsque le niveau du liquide atteint la partie supérieure du pressuriseur où la détection du niveau devient inopérante, on garde un débit constant sur la conduite de charge (14), on règle le débit de décharge par une régulation à action rapide (12) à partir d'une mesure directe (34) de la pression du circuit primaire, puis on procède à des aspersions successives au pressuriseur et on détecte la réduction de débit de décharge qui est immédiatement provoquée par la diminution de pression due à la condensation dans le pressuriseur, et ceci jusqu'à ce qu'une nouvelle aspersion n'ait plus d'effet sur le débit de décharge, le refroidissement pouvant alors se poursuivre avec régulation de pression par la vanne de décharge (10).

2. Procédé selon revendication 1, caractérisé par le fait qu'il est rendu automatique par asservissement du débit de la vanne de commande d'aspersion (23) à partir de la mesure (38—40) des variations du débit de décharge, en utilisant une régulation (36) à vitesse de réaction plus lente que celle de la régulation (12) de la vanne de décharge à partir de la mesure directe (34) de la pression du circuit primaire.

## Patentansprüche

1. Druckregelungsverfahren des Primärkreises (1) beim Abfahren von einem Druckwasserkernreaktor, zwecks Einsatz in einer Anlage, die als Bypass an dem Primärkreis, einen volumetrischen Kontrollkreis mit einem Primärkreisentlastungsschieber (10), einen volumetrischen Kontrollbehälter (13), außerdem eine Pumpe (15) zur Rückführung über einen Einlaßschieber (17) in den Primärkreis, aufweist, wobei der Primärkreis mit einem Dampf-Flüssigkeitsdruckhalter (5) verbunden ist, der einen über einen Schieberventil (23) gesteuerten Kreis zur Berieselung der Dampfphase aufweist, der von der Druckleitung (14) des volumetrischen Kontrollkreises gespeist wird, Verfahren bei welchem der in dem Druckhalter (5) enthaltene Dampf kontinuierlich mit Kaltwasser während der Kühlung des Kreises durch Sekundärdampfentlastung berieselt wird, der Entlastungsdurchsatz entsprechend einer unmittelbar oberhalb des Entlastungsschiebers (10) und hinter einer Entspannungsvorstufe (9) durchgeführten Druckmessung (11) geregelt wird, und die Versorgungsmenge entsprechend dem Flüssigkeitsstand in dem Druckhalter (5) eingestellt wird, dadurch gekennzeichnet, daß wenn der Flüssigkeitsstand den oberen Druckhalterteil erreicht, in welchem der Pegel nicht mehr erfaßt werden kann, ein konstanter Durchsatz in der Druckleitung (14) beibehalten wird, der Entlastungsdurchsatz durch eine schnellwirkende Regelung (12) aufgrund einer Direktmessung (34) des Primärkreisdruckes eingestellt wird, dann aufeinanderfolgende Berieselung am Druckhalter durchgeführt werden, und die Abnahme der Entlastungsdurchsatzmenge ermittelt wird, die sofort durch die Druckminderung aufgrund der Kondensation im Druckhalter bewirkt wird, und dies bis eine erneute Berieselung auf den Entlastungsdurchsatz keine Wirkung mehr hat, wobei die Abkühlung mittels der Druckregelung über den Entlastungsschieber (10) dann weiterhin fortgesetzt werden kann.

2. Verfahren nach Anspruch 1, dadurch gekennzeichnet, daß es unter Anwendung einer gegenüber der Regelung (12) des Entlastungsschiebers von der Direktmessung (34) des Primärkreisdruckes ausgehend verzögert wirkenden Regelung (36) durch Steuerung der Durchsatzmenge aufgrund der Messung (38—40) der Schwankungen der Entlastungsdurchsatzmenge automatisiert wird.

**Claims**

1. Process for regulating the pressure of the primary circuit (1) of a pressurised-water nuclear reactor during the shutting-down phases, to be used in an installation incorporating, branched to the primary circuit, a volumetric monitoring circuit with a discharge valve (10) for the primary circuit, a volumetric monitoring tank (13), and then a pump (15) for reinjection towards the primary circuit via a charging valve (17), the primary circuit being connected to a vapour/liquid pressuriser (5) equipped with a vapourphase sprinkling circuit controlled by a valve (23) fed from the charging pipe (14) of the volumetric monitoring circuit, according to which process, during the time when the circuit is cooled as a result of discharge of secondary vapour, continuous sprinkling of cold water on the vapour contained in the pressuriser (5) is carried out, the discharge flow is adjusted as a function of a pressure measurement (11) taken immediately upstream of the discharge valve (10) and after an upstream expansion stage (9), and the charging flow is adjusted as a function of the level of liquid in the pressuriser (5), characterized in that when the level of liquid reaches the upper part of the pressuriser, where detection of the level becomes effectual, a constant flow to the charging pipe (14) is maintained, the discharge flow is adjusted by means of quick-acting regulation (12) on the basis of a direct measurement (34) of the pressure of the primary circuit, and then successive sprinklings are carried out on the pressuriser, and the reduction in discharge flow caused immediately as a result of the diminishing pressure attributable to condensation in the pressuriser is detected, specifically until a new sprinkling no longer has any effect on the discharge flow, and cooling can then be continued with pressure regulation by means of the discharge valve (10).

2. Process according to claim 1, characterized in that it is made automatic as a result of servo-control of the flow to the sprinkling control valve (23) on the basis of the measurement (38—40) of the variations in the discharge flow, using a regulation (36) which has a slower reaction speed than the regulation (12) of the discharge valve on the basis of direct measurement (34) of the pressure of the primary circuit.

Fig 1

Fig 2